# EUROPEAN PATENT SPECIFICATION

(11) **EP 4 382 800 B1**
(45) Date of publication and mention of the grant of the patent: **10.12.2025**
(21) Application number: 22211717.8
(22) Date of filing: 06.12.2022
(51) Int. Cl.: F21S 43/14, F21S 43/237, B60Q 3/62, F21V 8/00, G02B 6/38, F21S 43/249, G02B 19/00, F21S 43/27

(54) **ILLUMINATION DEVICE FOR A VEHICLE AND VEHICLE COMPRISING SUCH AN ILLUMINATION DEVICE**
BELEUCHTUNGSVORRICHTUNG FÜR EIN FAHRZEUG UND FAHRZEUG MIT SOLCH EINER BELEUCHTUNGSVORRICHTUNG
DISPOSITIF D'ÉCLAIRAGE POUR UN VÉHICULE ET VÉHICULE COMPRENANT UN TEL DISPOSITIF D'ÉCLAIRAGE

(43) Date of publication of application: 12.06.2024
(73) Proprietor: HELLA GmbH & Co. KGaA, 59552 Lippstadt (DE); HELLA Saturnus Slovenija d.o.o., 1000 Ljubljana (SI)
(72) Inventor: Bizal, Ana, 79111 Freiburg (DE); Bucar, Alen, 8210 Trebnje (SI); Stante, Rok, 4207 Cerklje na Gorenjskem (SI)
(74) Representative: Behr-Wenning, Gregor

(56) References cited:
- EP-A1- 1 693 615
- WO-A1-00/58664
- WO-A1-2004/027474
- WO-A1-2006/033029
- WO-A1-2013/006970
- WO-A2-2007/016282
- CN-A- 115 195 582
- DE-A1- 102016 218 326
- DE-A1- 102019 209 727
- DE-B3- 102014 217 826
- JP-A- 2021 197 335
- US-A1- 2008 239 748
- US-A1- 2012 236 559

## Description

The present invention relates to an illumination device for a vehicle. Moreover, the present invention relates to a vehicle comprising such an illumination device.

The illumination in a vehicle is becoming more and more important. In particular, the illumination of the passenger compartment is of relevance in terms of functionality and design. Illuminated surfaces can be used for orientation and for triggering certain functions like the activation of a window lifter or the air condition. The same is true for illuminated switches. From a design perspective, an ambiance lighting can be provided by a respective illumination by which a particular atmosphere can be produced inside the passenger compartment.

LEDs are usually used as light sources as they have a significantly reduced energy consumption and heat generation compared to light bulbs. For guiding the light produced by the light sources to a particular location inside the passenger compartment, light guides are used. Light guides usually comprise a bundle of optical fibers in particular made of plastic or glass into which the light provided by the light source must be coupled. The light source usually comprises three LEDs, each of which providing light of a different one of the primary colors red, green and blue. By changing the intensity of the light emitted by the three LEDs, light of different color can be provided. The same may apply to other light sources such as laser light.

However, to effectively couple the light into the light guide and to provide light of high homogeneity with respect to color and intensity, it is necessary to mix the light emitted by the LEDs prior to the coupling into the light guide.

EP 3 525 017 A1 discloses an illumination device including a mixing unit to mix the light emitted by the LEDs. The mixing unit is typically rod-shaped and has a hexagonal cross section. The mixing unit is comparatively long so that the occupied installation space is big. However, the installation space inside a vehicle is limited. As a result, not all the conceivable applications can be implemented or the light generating unit must be positioned far away from the location of the passenger compartment to be illuminated. The light guide may thus become fairly long which may lead to losses in the intensity of the light reaching the location to be illuminated.

Further information regarding the technical background of the present invention can be found in EP 1 693 615 A1, US 2012/236559 A1, WO 00/58664 A1 and WO 2007/016282 A2. Moreover, CN115195582 A describes a system for creating dynamic lighting effects in a car star roof using light-emitting modules. The light-emitting modules utilize optical fibre groups to form lighting patterns. A ferrule is part of a locking module, used to bundle and stabilize the optical fibre group.

It is therefore one task of one embodiment of the present invention to propose an illumination device requiring reduced constructional space compared to illumination devices known in the prior art. Moreover, it is one task of the present invention to present a vehicle equipped with such an illumination device.

The task is solved by the features specified in claims 1 and 7. Advantageous embodiments are the subject of the dependent claims.

According to an embodiment of the present invention the illumination device for a vehicle comprises
- a light generating unit, comprising at least
   o a first light source providing light of a first color, and
   o a second light source providing light of a second color, and
- a mixing unit having a first end and a second end, wherein
   o the light provided by the first light source and the second light source is coupled into the mixing unit at the first end,
   o the mixed light is leaving the mixing unit at the second end, and
   o a reflection surface is extending between the first end and the second end on which the light coupled into the mixing unit is reflected,
- wherein the reflection surface has diffusive properties such that the light coupled into the mixing unit is diffusively reflected.

The term that the reflection surface extends between the first end and the second end could be understood such that it completely or partially extends between the first end and the second end.

The diffusive reflection is also known as body reflection or Lambertian reflection and takes place on reflection surfaces having diffusive properties. The light impinging on such reflection surfaces is reflected or scattered into multiple directions.

In contrast to that the mixing unit disclosed in EP 3 525 017 A1 comprises a reflection surface that is very flat and resembles a mirror. The light impinging on flat reflection surfaces is reflected almost entirely into one direction only. The angle of incidence equals the emergent angle. This kind of reflection is also known as specular reflection. The mixing unit of EP 3 525 017 A1 has a length such that 60% of the light is reflected twice on the reflection surface before leaving the mixing unit via the second end. It is believed that such a reflection behavior leads to an effective coupling of the light into the light guide and leads to a homogeneous emitted light with respect to color and intensity.

The reflections taking place on the reflection surface of the mixing unit according to the present invention are composed of both the Lambertian reflection and the specular reflection. Since a certain portion of the light impinging on the reflection surface of the inventive mixing unit is reflected by an emergent angle smaller than the angle of incidence, a sufficient mixing of light can be implemented in a mixing unit having a smaller length compared to the one e.g., disclosed in EP 3 525 017 A1. Nevertheless, the light leaving the mixing unit via the second surface has a comparable homogeneity with respect to intensity and color. The inventive illumination device thus takes up less constructional space without compromising the quality of the emitted light.

According to the present invention a light guide is fastened to the second end of the mixing unit. Although other applications are conceivable, in most cases the light exiting the mixing unit is coupled into one or more light guides. The light guides then further transport the light to the locations to be illuminated, such as surfaces or switches.

The light exiting the mixing unit is well conditioned for an effective coupling into the light guide.

In accordance with the invention, the light guide is fastened to the mixing unit by a ferrule. It has been found that a ferrule is a cheap fastening means by which the light guide can be connected to the mixing unit such that the assembly is kept simple. Moreover, losses in light intensity upon coupling the light exiting the mixing unit into the light guide are kept low.

Moreover, the illumination device according to the present invention comprises
- a housing for receiving the light generating unit and the mixing unit, and
- a fastening part releasably connectable to the housing by means of a latching connection, wherein the fastening part comprises at least one locking unit engaging behind the ferrule in the connected state.

As mentioned, the length of the inventive mixing unit is significantly smaller compared to mixing units known from the prior art. As a result, the housings of known illumination devices comprise long elevations surrounding the mixing unit. The ferrule is connected to the free end of the elevation and thus at a fairly big distance from the remaining housing. Usually, a kind of cap nut or the like is used for connecting the ferrule to the free end of the elevation.

In contrast to that, the elevation of the housing of the inventive illumination device is significantly smaller such that the ferrule is located closer to the remaining housing. Due to the reduced distance a latching connection can be used by which the fastening process can be simplified compared to the use of a cap nut or the like as employed in the prior art. Due to the reduced distance, bending moments acting on the elevation and thus on the connection between the ferrule and the elevation are also reduced such that the connection can be designed less dimensioned.

In another embodiment the reflection surface has a roughness of equal to or larger than 1 µm. The roughness may refer to the maximal surface roughness Rmax which is the largest individual roughness depth of the individual measuring sections. An upper limit of the maximal surface roughness is estimated to be of 50 µm. It has been found that reflection surfaces of such a roughness result in a particular effective mixing and the light exiting the illumination device has a high homogeneity in terms of color and intensity.

A further embodiment defines that the reflection surface is provided by a grained surface. A grained surface is comparatively easy to manufacture and leads to the desired properties of the light exiting the illumination device.

According to an embodiment of the present invention the grained surface is metalized. A metalized surface ensures that a high percentage of the light is reflected on the reflection surface such that losses in particular in terms of intensity inside the mixing unit can be kept low.

In another embodiment the reflection surface is provided by a diffusing material having diffusive properties. Not only the surface properties as such have an influence on the diffusive properties but also the material the reflection surface is made of. To provide the desired diffusive properties it may be sufficient to manufacture the reflective surface using a corresponding material. Reflection surface treatment steps may be omitted, thereby keeping the manufacturing of the illumination device simple.

A further embodiment defines that the diffusing material is a plastic material, in particular polymers such as polycarbonate. In particular the use of thermoplastic resins such as polycarbonate enable the production of the mixing unit by injection molding such that a large number of mixing units can be produced in a short time at acceptable costs. It has been found that polycarbonate provides diffusive properties that match the requirements mentioned above. Suitable commercially available polycarbonates are e.g., ALCOM PWL 10/1.1 WT1302-05LB, ALCOM LB PC 1000 14073 WT1164-14 and ALCOM PWL 10/1 WT41-913LB.

Another aspect of the invention is directed to a vehicle comprising an illumination device according to one of the embodiments previously described.

The technical effects and advantages as discussed regarding the present illumination device equally applies to the vehicle. Briefly, the reflections taking place on the reflection surface of the mixing unit according to the present invention are composed of both the Lambertian reflection and the specular reflection. A sufficient mixing of light can be implemented in a mixing unit having a smaller length compared to the ones known in the prior art. However, the light leaving the mixing unit via the second surface has a comparable homogeneity with respect to intensity and color. The inventive illumination device thus takes up less constructional space without compromising the quality of the emitted light. Thus, the available constructional space inside a given vehicle can be used for installing the inventive illumination device which would be too small when using conventional illumination devices. The number of illumination applications inside a given vehicle can be increased.

The present invention is described in detail with reference to the drawings attached wherein
- Figure 1A: shows an illumination device according to the prior art,
- Figure 1B: shows the section X defined in Figure 1A by an enlarged view,
- Figure 2A: shows an illumination device according to the invention.
- Figure 2B: shows the section Y defined in Figure 2A by an enlarged view, Figures 1A to 2B being principle drawings,
- Figure 3: a perspective view of an inventive illumination device coupled to a light guide,
- Figure 4: a principle top view on a vehicle comprising a plurality of the inventive illumination devices e.g., as shown in Figure 3.

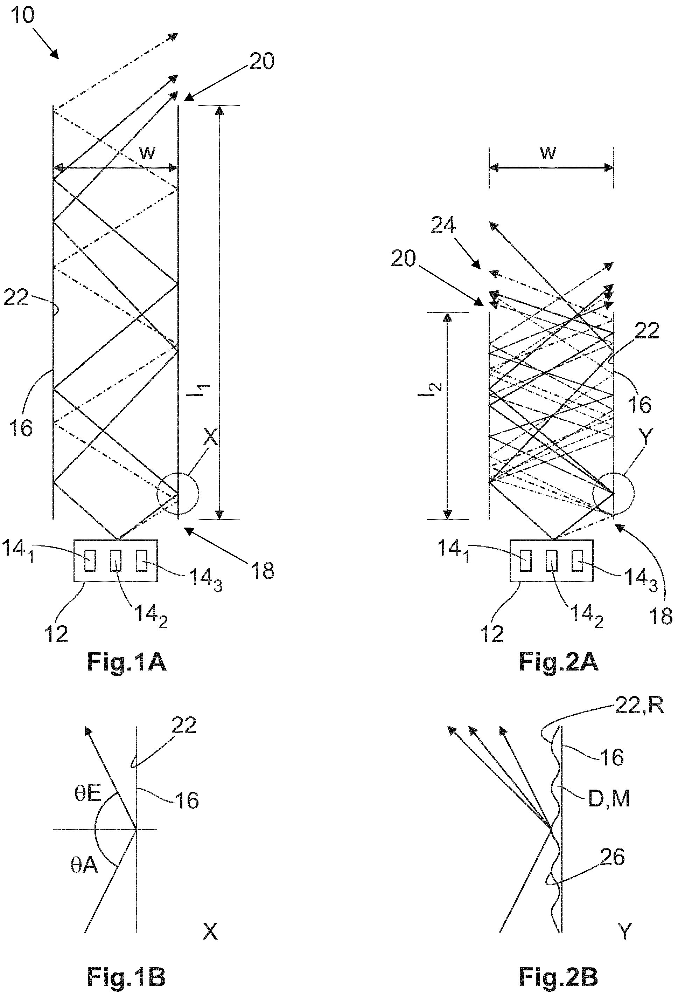

Figure 1A shows an illumination device 10 according to the prior art by means of a principle drawing. The illumination device 10 comprises a light generating unit 12 having a first light source 14₁, a second light source 14₂ and a third light source 14₃ which are all embodied as LEDs, however, the light generating unit 12 may also include other light sources such as laser light. The first light source 14₁ emits light of a first color, e.g., red, the second light source 14₂ emits light of a second color, e.g., green and the third light source 14₃ emits light of a third color, e.g., blue (primary colors).

Moreover, the illumination device 10 is equipped with a mixing unit 16 which is rod-shaped and has a first end 18 and a second end 20. A reflection surface 22 is extending between the first end 18 and the second end 20. The mixing unit 16 may have a hexagonal cross section and a first length I₁ between the first end 18 and the second end 20 and a given width w. Light emitted by the light generating unit 12 is coupled into the mixing unit 16 and enters the same at the first end 18.

As in particular evident from Figure 1B, the reflection surface 22 of the mixing unit 16 shown in Figure 1A is very flat and resembles a mirror. A given ray of light that impinges the reflection surface 22 by an angle of incidence θA is reflected on the reflection surface 22 almost entirely into one direction, the emergent angle θE being equal to the angle of incidence θA. This kind of reflection is also called specular reflection. The reflection causes a mixing of the light emitted by the three light sources 14₁, 14₂, 14₃ such that a fairly homogenous light in terms of color and intensity exits the mixing unit 16 at the second end 20.

In Figures 2A and 2B an illumination device 24 according to the present invention is shown, also by means of principle drawings. The basic construction of the illumination device 24 according to the present invention is similar to the illumination device 10 shown in Figures 1A and 1B so only the key differences are further discussed in the following.

Again, the mixing unit 16 comprises the first end 18 and the second end 20 which are arranged distant from each other by a second length I2. The mixing unit 16 has a width w that is the same as the width w of the mixing unit 16 of the illumination device 10 shown in Figures 1A and 1B. The reflection surface 22 of the illumination device 24 according to the present invention has diffusive properties D such that light entering the mixing unit 16 is not only reflected by means of the specular reflection as described for the mixing unit 16 shown in Figures 1A and 1B. Due to the diffusive properties D the light impinging on the reflection surface 22 of the inventive mixing unit 16 is further reflected in many more directions, two of which are shown in Figure 2B. in this case the emergent angles θE (not explicitly indicated in Figure 2B) are different from the angle of incidence θA (not explicitly indicated in Figure 2B). This kind of reflection is called Lambertian reflection.

Due to the diffusive properties D of the reflection surface 22 the second length l₂ can be reduced compared to the first length l₁ (cf. Figures 1A and 2A) without compromising the homogeneity of the light exiting the mixing unit 16 in terms of color and intensity. It has been found that in keeping the diameter or the width w of the mixing unit 16 constant, the second length l2 can be reduced to one sixth or even less of the first length l₁.

In Figure 2B the reflection surface 22 of the mixing unit 16 according to the invention is shown in detail. The reflection surface 22 may have a roughness R larger than 1 µm. Moreover, the reflection surface 22 can be provided by a grained surface 26 which may be metalized.

Alternatively or cumulatively, the reflection surface 22 is provided by a diffusing material M having diffusive properties D such as a plastic material, in particular polycarbonate.

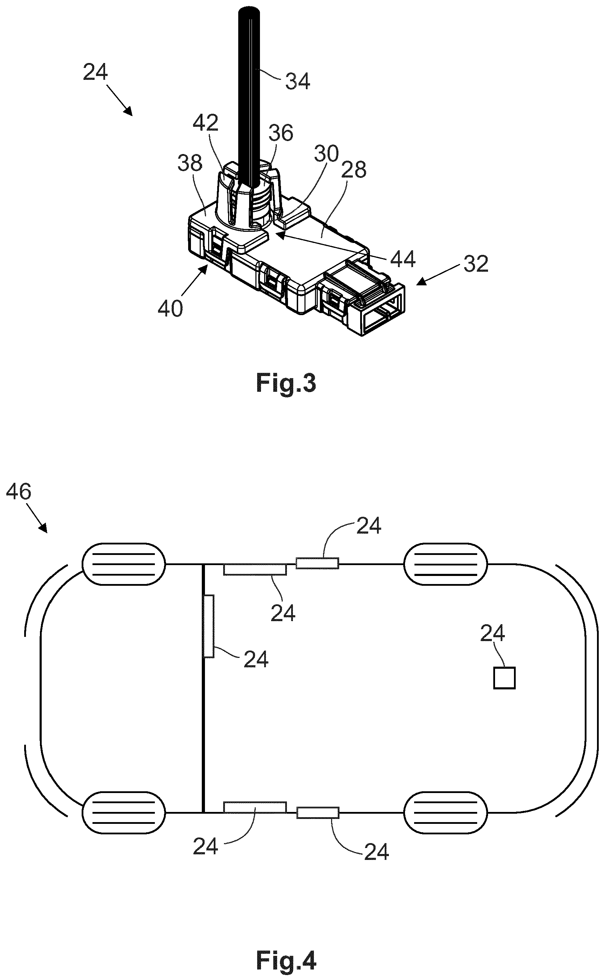

Referring to Figure 3, an illumination device 24 according to the invention is shown by means of a perspective view. The illumination device 24 comprises a housing 28 in which the light generating unit 12 and the mixing unit 16 (see Figures 2A and 2B) are arranged. The housing 28 forms a plug 32 to which power cables can be connected to provide the light generating unit 12 with electric energy.

Moreover, the housing 28 forms a small elevation 30 that surrounds the mixing unit 16. A light guide 34 is connected to the elevation 30 by means of a ferrule 36. A separate fastening part 38 is connected to the housing 28 by means of a latching connection 40. The fastening part 38 forms a plurality of locking units 42 that fasten the ferrule 36 to the elevation 30. In the connected state as shown in Figure 3 the locking units 42 enclose the light guide 34 and engage behind the ferrule 36 seen from the housing 28. The locking units 42 form at least one gap 44 through which the light guide 34 can be moved such that the locking units 42 can engage behind the ferrule 36. Then the fastening part 38 is moved towards the housing 28 and connected with the same by means of the latching connection 40. In the connected state the ferrule 36 is correctly positioned with respect to the elevation 30.

Figure 4 shows a principle top view on a vehicle 46 comprising a plurality of the inventive illumination devices 24 e.g., as shown in Figure 3.

### Reference list

- 10: illumination device according to the prior art
- 12: light generating unit
- 14: light source
- 14₁: first light source
- 14₂: second light source
- 14₃: third light source
- 16: mixing unit
- 18: first end
- 20: second end
- 22: reflecting surface
- 24: illumination device according to the invention
- 26: grained surface
- 28: housing
- 30: elevation
- 32: plug
- 34: light guide
- 36: ferrule
- 38: fastening part
- 40: latching connection
- 42: locking unit
- 44: gap
- 46: vehicle

- D: diffusive property
- l1: first length
- l2: second length
- M: diffusing material
- R: roughness
- w: width
- θA: angle of incidence
- θE: emergent angle

## Claims

1. Illumination device (24) for a vehicle (46), comprising
- a light generating unit (12), comprising at least
∘ a first light source (14₁) providing light of a first color, and
∘ a second light source (14₂) providing light of a second color, and
- a mixing unit (16) having a first end (18) and a second end (20), wherein
∘ the light provided by the first light source (14₁) and the second light source (14₂) is coupled into the mixing unit (16) at the first end (18),
∘ the mixed light is leaving the mixing unit (16) at the second end (20), and
∘ a reflection surface (22) is extending between the first end (18) and the second end (20) on which the light coupled into the mixing unit (16) is reflected,
- wherein the reflection surface (22) has diffusive properties (D) such that the light coupled into the mixing unit (16) is diffusively reflected,
- wherein a light guide (34) is fastened to the second end of the mixing unit (16) by a ferrule (36).
**characterized in that** the illumination device (24) comprises
- a housing (28) for receiving the light generating unit (12) and the mixing unit (16), and
- a fastening part (38) releasably connectable to the housing (28) by means of a latching connection (40), wherein the fastening part (38) comprises at least one locking unit (42) engaging behind the ferrule (36) in the connected state.

2. Illumination device (24) according to claim 1,
**characterized in that** the reflection surface (22) has a roughness (R) of larger than 1 µm.

3. Illumination device (24) according to claim 2,
**characterized in that** the reflection surface (22) is provided by a grained surface (26).

4. Illumination device (24) according to claim 3,
**characterized in that** the grained surface (26) is metalized.

5. Illumination device (24) according to claim 1,
**characterized in that** the reflection surface (22) is provided by a diffusing material (M) having diffusive properties (D).

6. Illumination device (24) according to claim 5,
**characterized in that** the diffusing material (M) is a plastic material, in particular polymers such as polycarbonate.

7. Vehicle (46), comprising an illumination device (24) according to one of the preceding claims.

## Patentansprüche

1. Beleuchtungsvorrichtung (24) für ein Fahrzeug (46), umfassend:
- eine lichterzeugende Einheit (12), umfassend mindestens
∘ eine erste Lichtquelle (14₁), die Licht einer ersten Farbe bereitstellt, und
∘ eine zweite Lichtquelle (14₂), die Licht einer zweiten Farbe bereitstellt, und
- eine Mischungseinheit (16) mit einem ersten Ende (18) und einem zweiten Ende (20), wobei
o das von der ersten Lichtquelle (14₁) und der zweiten Lichtquelle (14₂) bereitgestellte Licht in die Mischungseinheit (16) am ersten Ende (18) eingekoppelt wird,
o das gemischte Licht die Mischungseinheit (16) am zweiten Ende (20) verlässt, und
o sich eine Reflexionsfläche (22) zwischen dem ersten Ende (18) und dem zweiten Ende (20) erstreckt, auf der das in die Mischungseinheit (16) eingekoppelte Licht reflektiert wird,
- wobei die Reflexionsfläche (22) diffusive Eigenschaften (D) aufweist, sodass das in die Mischungseinheit (16) eingekoppelte Licht diffusiv reflektiert wird,
- wobei ein Lichtleitstab (34) durch eine Hülse (36) am zweiten Ende der Mischungseinheit (16) befestigt ist,
**dadurch gekennzeichnet, dass** die Beleuchtungsvorrichtung (24) Folgendes umfasst:
- ein Gehäuse (28) zum Aufnehmen der Lichterzeugungseinheit (12) und der Mischungseinheit (16), und
- ein Befestigungsteil (38), das mittels einer Rastverbindung (40) lösbar mit dem Gehäuse (28) verbindbar ist, wobei das Befestigungsteil (38) mindestens eine Verriegelungseinheit (42), die im verbundenen Zustand hinter der Hülse (36) eingreift, umfasst.

2. Beleuchtungsvorrichtung (24) nach Anspruch 1,
**dadurch gekennzeichnet, dass** die Reflexionsfläche (22) eine Rauheit (R) von mehr als 1 µm aufweist.

3. Beleuchtungsvorrichtung (24) nach Anspruch 2,
**dadurch gekennzeichnet, dass** die Reflexionsfläche (22) durch eine gekörnte Oberfläche (26) bereitgestellt ist.

4. Beleuchtungsvorrichtung (24) nach Anspruch 3,
**dadurch gekennzeichnet, dass** die gekörnte Oberfläche (26) metallisiert ist.

5. Beleuchtungsvorrichtung (24) nach Anspruch 1,
**dadurch gekennzeichnet, dass** die Reflexionsfläche (22) durch ein streuendes Material (M) mit diffusiven Eigenschaften (D) bereitgestellt ist.

6. Beleuchtungsvorrichtung (24) nach Anspruch 5,
**dadurch gekennzeichnet, dass** das streuende Material (M) ein Kunststoffmaterial ist, insbesondere Polymere wie Polycarbonat.

7. Fahrzeug (46), umfassend eine Beleuchtungsvorrichtung (24) nach einem der vorhergehenden Ansprüche.

## Revendications

1. Dispositif d'éclairage (24) pour un véhicule (46) comprenant
- une unité génératrice de lumière (12) comprenant au moins
o une première source de lumière (14₁) fournissant de la lumière d'une première couleur et
o une deuxième source de lumière (14₂) fournissant de la lumière d'une deuxième couleur et
- une unité mélangeuse (16) comportant une première extrémité (18) et une deuxième extrémité (20), **caractérisé en ce que**
o la lumière fournie par la première source de lumière (14₁) et la deuxième source de lumière (14₂) est couplée à la première extrémité (18) dans l'unité mélangeuse (16),
o la lumière mélangée quitte l'unité mélangeuse (16) au niveau de la deuxième extrémité (20) et
o une surface de réflexion (22) s'étend entre la première extrémité (18) et la deuxième extrémité (20) sur laquelle la lumière couplée dans l'unité mélangeuse (16) est réfléchie,
- sachant que la surface de réflexion (22) a des propriétés de diffusion (D) telles que la lumière couplée dans l'unité mélangeuse (16) est réfléchie de manière diffuse,
- sachant qu'un guide de lumière (34) est fixé à la deuxième extrémité de l'unité mélangeuse (16) au moyen d'une virole (36),
**caractérisé en ce que** le dispositif d'éclairage (24) comprend
- un boîtier (28) destiné à recevoir l'unité génératrice de lumière (12) et l'unité mélangeuse (16) et
- un élément de fixation (38) pouvant être relié de manière amovible au boîtier (28) au moyen d'une connexion de verrouillage (40), sachant que l'élément de fixation (38) comprend au moins une unité de verrouillage (42) s'engageant derrière la virole (36) à l'état connecté.

2. Dispositif d'éclairage (24) selon la revendication 1,
**caractérisé en ce que** la surface de réflexion (22) présente une rugosité (R) supérieure à 1 µm.

3. Dispositif d'éclairage (24) selon la revendication 2,
**caractérisé en ce que** la surface de réflexion (22) est pourvue d'une surface grenée (26).

4. Dispositif d'éclairage (24) selon la revendication 3,
**caractérisé en ce que** la surface grenée (26) est métallisée.

5. Dispositif d'éclairage (24) selon la revendication 1,
**caractérisé en ce que** la surface de réflexion (22) est constituée d'un matériau diffusant (M) ayant des propriétés de diffusion (D).

6. Dispositif d'éclairage (24) selon la revendication 5,
**caractérisé en ce que** le matériau diffusant (M) est une matière plastique, constituée en particulier de polymères tels que le polycarbonate.

7. Véhicule (46) comprenant un dispositif d'éclairage (24) selon l'une des revendications précédentes.
